# EUROPEAN PATENT SPECIFICATION

(11) **EP 3 226 741 B1**
(45) Date of publication and mention of the grant of the patent: **08.05.2019**
(21) Application number: 15817621.4
(22) Date of filing: 24.11.2015
(51) Int. Cl.: A47L 15/42, A47L 15/48

(54) **A HEAT PUMP DISHWASHER**
WÄRMEPUMPENGESCHIRRSPÜLER
LAVE-VAISSELLE COMPRENANT UNE POMPE À CHALEUR

(30) Priority: 03.12.2014 TR 201414625
(43) Date of publication of application: 11.10.2017
(73) Proprietor: Arçelik Anonim Sirketi, 34950 Istanbul (TR)
(72) Inventor: POYRAZ, Onur, 34950 Istanbul (TR); ERTIS, Vasi Kadir, 34950 Istanbul (TR); BIRCI, Emine, 34950 Istanbul (TR); AKKAS, Nevin, 34950 Istanbul (TR); ARIGUL, Meryem Guneri, 34950 Istanbul (TR)
(86) International application number: PCT/TR2015/050195
(87) International publication number: WO 2016/089331

(56) References cited:
- EP-A1- 2 215 955
- EP-A2- 2 682 037
- WO-A1-2014/094854
- WO-A1-2015/090408
- WO-A1-2015/090409

## Description

The present invention relates to a dishwasher comprising a heat pump providing the heating of the water to be used in washing.

In dishwashers, heating the water used for washing and rinsing the dishes to be used by heat pumps with low energy consumption is known. The heat pumps are operated with the principle that the refrigerant is compressed and expanded between at least two heat exchangers, thus providing heat transfer. In addition, heat is drawn from the environment or from an additional heat source such as heat reservoir by the heat exchanger and the heat drawn is transferred to the other heat exchanger, thus increasing the effectiveness of the heat pump. Since the surface of the heat exchanger that draws heat from the environment is cold, the moisture in the ambient air condenses on the heat exchanger. Drip trays wherein the condensate is collected are used under the heat exchanger. If the water collected in the drip tray is not discharged, it causes bad odors and moreover, when the tray is overflown, the overflown water causes electrical failures.

In the state of the art European Patent Application No. EP2215955, a dishwasher is disclosed, that comprises two refrigerant circulation ducts driven by a single compressor.

In the state of the art European Patent Application No. EP2682037, a dishwasher is disclosed, wherein the condensate on the vaporizer is collected and transmitted to a rinsing chamber and discharged together with the wash water. The aim of the present invention is the realization of a dishwasher wherein the water condensing on the heat exchanger is efficiently discharged.

The dishwasher realized in order to attain the aim of the present invention, explicated in the first claim and the respective claims thereof comprises a duct wherein the refrigerant, that is circulated in the heat pump used for heating the wash water, is circulated, a valve that is disposed on the duct and that enables the flow direction of the refrigerant to be changed, and a control unit that enables the flow direction of the refrigerant to be changed by controlling the valve, and with the circulation of the refrigerant in the reverse direction, further providing that the first heat exchanger drawing heat from the environment during the heating of the wash water gives off heat and the water collected in the drip tray is evaporated by this heat.

In the dishwasher of the present invention, the control unit changes the flow direction of the refrigerant by means of the valve, thus providing that the first exchanger, that draws heat from the environment during the heating of the wash water and on the cold surface of which the moisture in the ambient air condenses, becomes a heat source and thus the water in the drip tray is evaporated with the heat provided by the first heat exchanger.

In an embodiment of the present invention, the control unit changes the flow direction of the refrigerant after the washing step. Although the heat pumps consume less energy with respect to electric heaters, it requires a longer time for the heat pumps to provide the same amount of heat. If it is desired to perform both heating and cooling on the same heat exchanger, changing the direction of the refrigeration circulation frequently prevents the heating/cooling process from being performed efficiently. Therefore, in order to prevent the prolonging of the total dish washing duration, after the wash water heating process is completed, the flow direction of the refrigerant is changed and the water in the drip tray is evaporated.

In another embodiment of the present invention, the control unit enables the waste water, that is still warm after being used during washing, to be passed over the second heat exchanger in order to increase the efficiency of the evaporation process. Thus, by gaining heat from the water to be discharged as waste water, less energy is consumed for the evaporation of the water in the drip tray.

In another embodiment of the present invention, the control unit changes the flow direction of the refrigerant after the rinsing step. In dishwashers wherein the hot water is used for rinsing process, the flow direction of the refrigerant is changed to evaporate the water in the drip tray after all the water heating processes to be carried out by the heat pump, which together take a relatively longer heating time, are completed.

In another embodiment of the present invention, the control unit enables the waste water, that is still warm after being used in the rinsing step and that is to be discharged as waste water, to be passed over the second heat exchanger. By means of this embodiment, the heat required for the evaporation of the water in the drip tray is provided by the water used in the rinsing step.

In another embodiment of the present invention, the control unit changes the flow direction of the refrigerant while the dishes are dried.

In another embodiment of the present invention, the control unit enables the water vapor evaporating from over the hot dishes to be directed onto the second heat exchanger. Thus, while the hot water vapor in the drying step is used for the evaporation of the water in the drip tray, the drying process is accelerated as the moisture leaving the dishes condenses on the second heat exchanger the surface of which cools down after the flow direction of the refrigerant is changed.

In another embodiment of the present invention, the water condensing on the second heat exchanger during the drying process is transferred to the drip tray. Thus, while the water condensing during the water heating process is evaporated, the water condensing during the drying process is also evaporated. The need for using additional components for discharging the water condensing on the second heat exchanger is eliminated.

In another embodiment of the present invention, the dishwasher comprises a fan that enables the ambient air to be blown onto the drip tray while the flow direction of the refrigerant is being changed and the water in the drip tray is being evaporated. By means of the fan, the evaporation process is accelerated.

In another embodiment of the present invention, the fan blows the air in the vicinity of the compressor towards the drip tray. By means of this embodiment, the evaporation process carried out by the heat pump is improved by blowing hot air onto the drip tray.

In another embodiment of the present invention, the valve providing the bidirectional operation of the heat pump is a four-way valve that is connected to the heat pump and controlled by the control unit.

By means of the present invention, in particular by means of the control unit, the heat pump is operated in a bidirectional manner and thus, the ambient moisture condensing on the cold surface of the first heat exchanger and then collected in the drip tray during the heating of the wash water can be evaporated by the heat provided by the first heat exchanger the surface of which is heated up by changing the flow direction of the refrigerant. Moreover, energy is recycled by using the waste water used in the washing and drying steps as well as the heat of the hot water vapor generated during the drying step for the evaporation process.

The dishwasher realized in order to attain the aim of the present invention is illustrated in the attached figures, where:

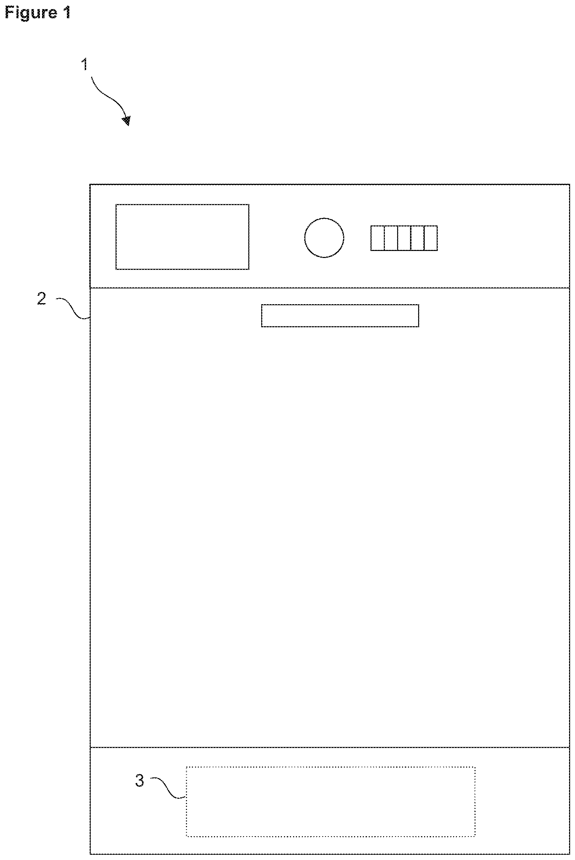

Figure 1 - is the schematic view of a dishwasher.

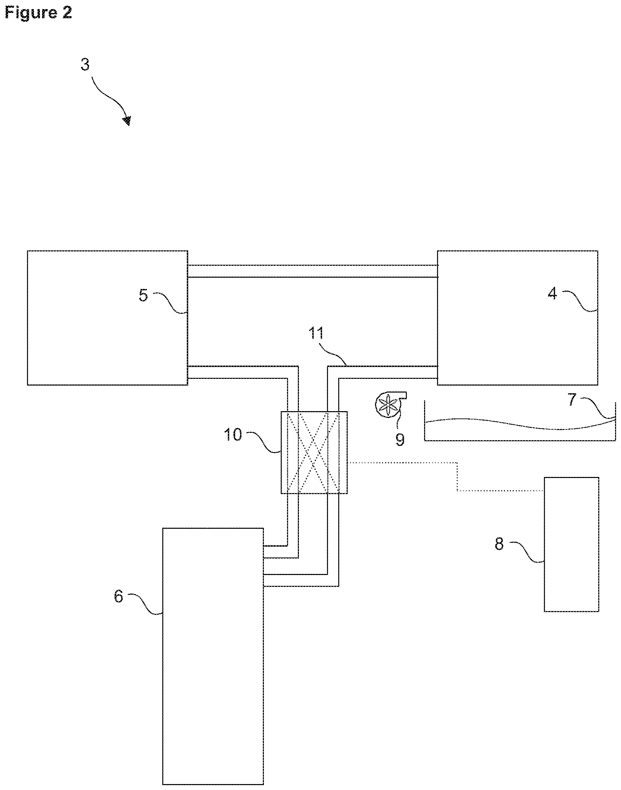

Figure 2 - is the schematic view of the heat pump, the drip tray and the fan related to an embodiment of the present invention.

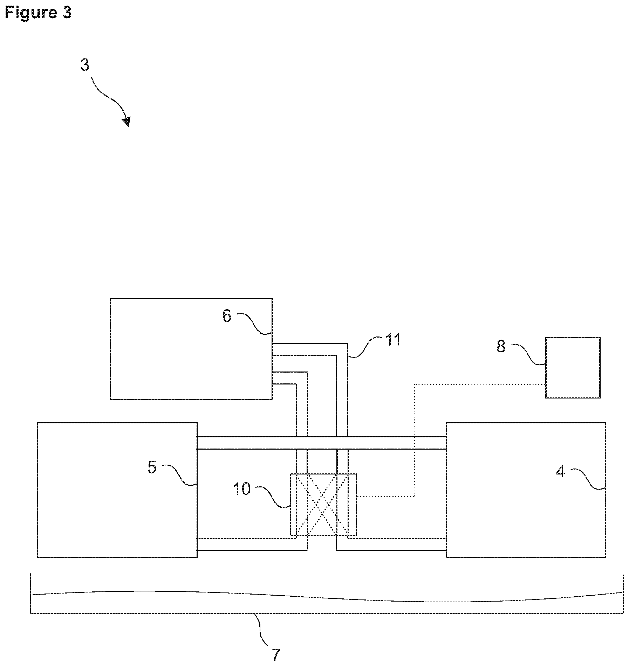

Figure 3 - is the schematic view of the heat pump and the drip tray related to an embodiment of the present invention.

The elements illustrated in the figures are numbered as follows:
1. Dishwasher
2. Body
3. Heat pump
4. First heat exchanger
5. Second heat exchanger
6. Compressor
7. Drip tray
8. Control unit
9. Fan
10. Valve
11. Duct

The dishwasher (1) comprises a body (2); a heat pump (3) that is disposed inside the body (2), that provides the heating of the water to be used in the washing step and that has a first heat exchanger (4) drawing heat from the ambient air, a second heat exchanger (5) transferring the heat received from the first heat exchanger (4) to the wash water and a compressor (6) fluidly connected to the first heat exchanger (4) and the second heat exchanger (5), realizing the refrigerant cycle by compressing and directing the refrigerant leaving the first heat exchanger (4) to the second heat exchanger (5), and a drip tray (7) that is disposed immediately under the first heat exchanger (4), wherein the water condensing on the first heat exchanger (4) is collected.

In the dishwasher (1), the refrigerant is compressed in the compressor (6) to be sent to the second heat exchanger (5), then leaves the second heat exchanger (5) to be transferred to the first heat exchanger (4) and returns from there to the compressor (6). The refrigerant cooling down on the second heat exchanger (5) passes over the first heat exchanger at a low temperature, thus enabling the heat transfer from the environment to the first heat exchanger (4) the surface of which is cooled down. The first heat exchanger (4) transfers the heat received from the environment to the refrigerant. The heat drawn from the environment by the first heat exchanger (4) is transferred to the second heat exchanger (5) by means of refrigerant. The second heat exchanger (5) transfer the heat drawn thereby to the wash water, thus enabling the heating of the wash water and this process is carried out by passing the water to be used in the washing step to be passed over the second heat exchanger (5) the surface of which heats up. At the same time, the ambient air condenses and leaves its moisture on the first heat exchanger (4) the surface of which is cool. The condensing water flows down to be collected in the drip tray (7) disposed immediately under the first heat exchanger (4).

The dishwasher (1) of the present invention comprises a duct (11) wherein the refrigerant is circulated, that extends between the compressor (6), the first heat exchanger (4) and the second heat exchanger (5); a valve (10) that is disposed on the duct (4) and that enables the refrigerant to be directed to the first heat exchanger (4) or the second heat exchanger (5) and a control unit (8) that, by directing the compressed refrigerant leaving the compressor (6) by means of the valve to the first heat exchanger (4), enables the first heat exchanger (4) to become a heat source and thus providing the evaporation of the water collected in the drip tray (7). The control unit (8) enables the direction of the refrigerant cycle to be changed by means of the valve (10) in order to evaporate the water collected in the drip tray (7). In this case, the compressed refrigerant leaving the compressor (6) is delivered to the first heat exchanger (4) and the refrigerant, that is at high temperature due to compression, causes the first heat exchanger (4) with its surface being cold, that draws heat from the environment during the heating of the wash water, to heat up, thus enabling the first heat exchanger (4) to give off heat to the environment. The heat dissipated by the first heat exchanger (4) causes the water collected in the drip tray (7) disposed immediately thereunder to be evaporated. By using the heat pump (3) that consumes less power in comparison to electric heaters for the heating of the drip tray (7), savings are provided.

In an embodiment of the present invention, the control unit (8) provides the evaporation of the water collected in the drip tray (7) by changing the flow direction of the compressed refrigerant leaving the compressor (6) after the washing step and directing the refrigerant to the first heat exchanger (4). By means of this embodiment, the heat pump (3) is enabled to efficiently heat the water used in the washing process and then the first heat exchanger (4) becomes a heat source, providing the evaporation of the water collected in the drip tray (7).

In another embodiment of the present invention, the control unit (8) provides the circulation of the water used in the washing step over the second heat exchanger (5) after the compressed refrigerant leaving the compressor (6) following the washing step is directed to the first heat exchanger (4). By changing the flow direction of the refrigerant, the second heat exchanger (5) starts to draw heat from the environment. In this embodiment, by circulating the water, that is used in the washing process and that is still hot, over the second heat exchanger (5) by using a circulation pump (not shown in the figures), the heat of the water used in the washing process is transferred to the first heat exchanger (4) with the circulation of the refrigerant. Thus, by using the heat of the dirty water used in the washing process for the evaporation of the water collected in the drip tray (7), savings in energy are provided.

In another embodiment of the present invention, the control unit (8) provides the evaporation of the water collected in the drip tray (7) by changing the flow direction of the compressed refrigerant leaving the compressor (6) after the rinsing step and directing the refrigerant to the first heat exchanger (4).

In another embodiment of the present invention, the control unit (8) provides the circulation of the water used in the rinsing step over the second heat exchanger (5) after the compressed refrigerant leaving the compressor (6) following the rinsing step is directed to the first heat exchanger (4). The heat of the water, that is used in the drying process and that is still hot, is transferred to the second heat exchanger (5) and the transferred heat is transferred to the first heat exchanger (4) by means of the refrigerant. The first heat exchanger (4), the surface of which heats up with the heat received from the water used in the rinsing process, provides the evaporation of the water collected in the drip tray (7). Moreover, by supplying the required heat from the used water, the load on the compressor (6) is reduced, thus increasing the lifespan of the compressor (6).

In another embodiment of the present invention, the control unit (8) provides the evaporation of the water collected in the drip tray (7) by changing the flow direction of the compressed refrigerant leaving the compressor (6) during the drying step and directing the refrigerant to the first heat exchanger (4).

In another embodiment of the present invention, the control unit (8) enables the water vapor generated in the drying step is enabled to be passed over the second heat exchanger (5). The dishes heated up after the drying step cause the water thereon to be evaporated. The control unit (8) provides the circulation of the water vapor provided by the dishes over the second heat exchanger (5), thus the thermal energy generated during the drying step is transferred to the first heat exchanger (4), providing the evaporation of the water collected in the drip tray (7).

In another embodiment of the present invention, the water condensing on the second heat exchanger (5) during the drying step is collected in the drip tray (7). With the control unit (8) changing the flow direction of the refrigerant by means of the valve (10), the surface of the second heat exchanger (5) cools down and the water vapor generated during the drying step condenses on the surface of the second heat exchanger (5). The drip tray (7) enables also the collection of the water condensing on the second heat exchanger (5). By means of this embodiment, during the evaporation of the water condensing on the first heat exchanger (4) while the wash water is being heated, the water condensing on the second heat exchanger (5) is also enabled to be evaporated.

In another embodiment of the present invention, the dishwasher (1) comprises a fan (9) that is disposed in the vicinity of the drip tray (7) and that enables the ambient air to be blown towards the drip tray (7). By means of this embodiment, by reducing the vapor pressure over the drip tray (7), the evaporation of the water in the drip tray (7) is accelerated.

In another embodiment of the present invention, the fan (9) enables the hot air in the vicinity of the compressor (6) to be directed towards the drip tray (7). With the control unit (8) changing the flow direction of the refrigerant, in addition to the heat provided by the first heat exchanger (4) for the evaporation of the water in the drip tray (7), the fan (9) blowing the air in the vicinity of the compressor (6) heating up due to the operation of the compressor (6) provides heat for the evaporation process.

In another embodiment of the present invention, the valve (10) is a four-way valve (10) that is fluidly connected to the heat pump (3) and that enables the flow direction of the refrigerant to be changed by being controlled by the control unit (8). The four-way valve (10) comprises two inlet and two outlet ports. In the normal cycle, in other words, in the step of heating the water to be used in the washing step, the first inlet port of the four-way valve (10) provides fluid transmission to the first outlet port while the second inlet port to the second outlet port. When the flow direction of the refrigerant is to be changed, the control unit (8) controls the four-way valve (10) and provides that the first inlet port delivers fluid to the second outlet port and the second inlet port to the first outlet port, thus changing the flow direction of the refrigerant.

In the dishwasher (1) of the present invention, with the control unit (8) changing the flow direction of the refrigerant over the heat pump (3), the water condensing on the first heat exchanger (4) and then collected in the drip tray (7) is enabled to be evaporated. By using the heat pump (3) instead of an electric heater during the process of discharging by evaporation, a significant saving in energy consumption is provided. Additionally, an environmentally-friendly dishwasher (1) is realized by directing the waste water, that is generated after the washing step and that cannot be used in normal operation conditions, and the heat of the water vapor, that is generated during the drying step, so as to be used in the evaporation process by means of the second heat exchanger (5).

## Claims

1. A dishwasher (1) **comprising** a body (2); a heat pump (3) that is disposed inside the body (2), that provides the heating of the water to be used in the washing step and that has a first heat exchanger (4) drawing heat from the ambient air, a second heat exchanger (5) transferring the heat received from the first heat exchanger (4) to the wash water and a compressor (6) fluidly connected to the first heat exchanger (4) and the second heat exchanger (5), realizing the refrigerant cycle by compressing and directing the refrigerant leaving the first heat exchanger (4) to the second heat exchanger (5), and a drip tray (7) that is disposed immediately under the first heat exchanger (4), wherein the water condensing on the first heat exchanger (4) is collected, a duct (11) wherein the refrigerant is circulated, that extends between the compressor (6), the first heat exchanger (4) and the second heat exchanger (5); **characterized by** a valve (10) that is disposed on the duct (11) and that enables the refrigerant to be directed to the first heat exchanger (4) or the second heat exchanger (5) and a control unit (8) that, by directing the compressed refrigerant leaving the compressor (6) by means of the valve to the first heat exchanger (4), enables the first heat exchanger (4) to become a heat source and thus providing the evaporation of the water collected in the drip tray (7).

2. A dishwasher (1) as in Claim 1, **characterized by** the control unit (8) that enables the compressed refrigerant leaving the compressor (6) after the washing step to be directed to the first heat exchanger (4).

3. A dishwasher (1) as in Claim 2, **characterized by** the control unit (8) that enables the water used in the washing step to be circulated over the second heat exchanger (5) after the compressed refrigerant leaving the compressor (6) after the washing step is directed to the first heat exchanger (4).

4. A dishwasher (1) as in any one of the above claims, **characterized by** the control unit (8) that enables the compressed refrigerant leaving the compressor (6) after the rinsing step to be directed to the first heat exchanger (4).

5. A dishwasher (1) as in Claim 4, **characterized by** the control unit (8) that enables the water used in the rinsing step to be circulated over the second heat exchanger (5) after the compressed refrigerant leaving the compressor (6) after the rinsing step is directed to the first heat exchanger (4).

6. A dishwasher (1) as in any one of the above claims, **characterized by** the control unit (8) that enables the compressed refrigerant leaving the compressor (6) during the drying step to be directed to the first heat exchanger (4).

7. A dishwasher (1) as in Claim 6, **characterized by** the control unit (8) that enables the water vapor generated during the drying step to be passed over the second heat exchanger (5).

8. A dishwasher (1) as in any one of the above claims, **characterized by** the drip tray (7) wherein the water condensing on the second heat exchanger (5) in the drying step is collected.

9. A dishwasher (1) as in any one of the above claims, **characterized by** a fan (9) that is disposed in the vicinity of the drip tray (7) and that enables the ambient air to be blown towards the drip tray (7).

10. A dishwasher (1) as in Claim 9, **characterized by** the fan (9) that enables the hot air around the compressor (6) to be directed towards the drip tray (7).

11. A dishwasher (1) as in any one of the above claims, **characterized by** the valve (10) being a four-way valve (10) which comprises two inlets and two outlets.

## Patentansprüche

1. Eine Geschirrspülmaschine (1) **umfasst** einen Körper (2) und eine innerhalb der Körper (2) angeordnete Wärmepumpe (3), die das im Wasserschritt zu verwendende Wasser erwärmt und einen ersten Wärmetauscher (4) besitzt, der der Umgebungsluft die Wärme entzieht und einen zweiten Wärmetauscher (5), der die vom ersten Wärmetauscher (4) empfangene Wärme auf das Waschwasser überträgt, einen Kompressor (6), der fließend mit dem ersten (4) und zweiten Wärmetauscher (5) verbunden ist, damit der Kältemittelkreislauf zustande kommt, indem das Kältemittel, das den ersten Wärmetauscher (4) verlässt, verdichtend zu dem zweiten Wärmetauscher (5) geleitet wird, eine Auffangschale (7), die direkt unter dem ersten Wärmetauscher (4) angeordnet ist und das aus dem ersten Wärmetauscher (4) kondensierende Wasser sammelt, ein Kanal (11), in dem das Kühlmittel zirkuliert wird, das sich zwischen dem Kompressor (6) an den ersten (4) und zweiten Wärmetauscher (5) erstreckt. Diese sind **gekennzeichnet durch** einen Ventil (10), das an dem Kanal (11) angeordnet und ermöglicht, dass das Kältemittel zu dem ersten (4) oder zweiten Wärmetauscher (5) geleitet wird; durch eine Steuereinheit (8), die durch das Leiten des verdichteten Kältemittels, das den Verdichter (6) durch das Ventil zum ersten Wärmetauscher (4) verlässt und den ersten Wärmetauscher (4) in die Lage versetzt, eine Wärmequelle zu werden und somit die Wärmequelle bereitzustellen und eine Verdampfung des in der Auffangschale (7) gesammelten Wassers zu verhindern.

2. Eine Geschirrspülmaschine (1), wie in Anspruch 1 aufgeführt, **ist dadurch gekennzeichnet, dass** die Steuereinheit (8) es ermöglicht, dass das komprimierte Kältemittel, welches den Kompressor (6) nach dem Waschschritt verlässt, zum ersten Wärmetauscher (4) geleitet wird.

3. Eine Geschirrspülmaschine (1), wie in Anspruch 2 aufgeführt, **ist dadurch gekennzeichnet, dass** die Steuereinheit (8) das Zirkulieren des im Waschschritt verwendeten Wassers über den zweiten Wärmetauscher (5) ermöglicht, nachdem das verdichtete Kältemittel den Kompressor (6) verlässt, nachdem der Waschschritt zum ersten Wärmetauscher (4) geleitet wird.

4. Eine Geschirrspülmaschine (1), wie in einem der vorherigen Ansprüchen aufgeführt, **ist dadurch gekennzeichnet, dass** die Steuereinheit (8) es ermöglicht, dass das komprimierte Kältemittel, das den Kompressor (6) nach dem Waschschritt verlässt, zum ersten Wärmetauscher (4) geleitet wird.

5. Eine Geschirrspülmaschine (1), wie in Anspruch 4 aufgeführt, **ist dadurch gekennzeichnet, dass** die Steuereinheit (8) das Zirkulieren des im Waschschritt verwendeten Wassers über den zweiten Wärmetauscher (5) ermöglicht, nachdem das verdichtete Kältemittel den Verdichter (6) verlässt und nach Abschluss der Waschschritt wird es zum ersten Wärmetauscher (4) geleitet.

6. Eine Geschirrspülmaschine (1), wie in einem der vorherigen Ansprüchen aufgeführt, **ist dadurch gekennzeichnet, dass** die Steuereinheit (8), die es ermöglicht, dass das verdichtete Kältemittel, das den Kompressor (6) während des Trocknungsschrittes verlässt, zu dem ersten Wärmetauscher (4) geleitet wird.

7. Eine Geschirrspülmaschine (1), wie in Anspruch 6 aufgeführt, **ist dadurch gekennzeichnet, dass** die Steuereinheit (8) den während des Trocknungsschrittes erzeugte Wasserdampf über den zweiten Wärmetauscher (5) leitet.

8. Eine Geschirrspülmaschine (1), wie in einem der vorherigen Ansprüchen aufgeführt, **ist dadurch gekennzeichnet, dass** die Auffangschale (7) das an dem zweiten Wärmetauscher (5) im Trocknungsschritt kondensierte Wasser auffängt.

9. Eine Geschirrspülmaschine (1), wie in einem der vorherigen Ansprüchen aufgeführt, **ist dadurch gekennzeichnet, dass** ein Lüfter (9) in der Nähe der Auffangschale (7) angeordnet ist und das Einblasen der Umgebungsluft zur Auffangschale (7) ermöglicht.

10. Eine Geschirrspülmaschine (1), wie in Anspruch 9 aufgeführt, **ist dadurch gekennzeichnet, dass** der Lüfter (9) die Heißluft um den Kompressor (6) herum in die Auffangschale (7) lenkt.

11. Eine Geschirrspülmaschine (1), wie in einem der vorherigen Ansprüchen aufgeführt, **ist dadurch gekennzeichnet, dass** das Ventil (10) ein Vierwegeventil (10) ist und zwei Einlässe und zwei Auslässe umfasst.

## Revendications

1. Un lave-vaisselle (1) **comprenant** un corps (2) ; une pompe à chaleur (3) disposée à l'intérieur du corps (2), qui assure le chauffage de l'eau à utiliser lors de l'étape de lavage et qui présente un premier échangeur thermique (4) aspirant la chaleur de l'air ambiant, un deuxième échangeur thermique (5) transférant la chaleur reçue du premier échangeur thermique (4) dans l'eau de lavage et un compresseur (6) relié par fluide au premier échangeur thermique (4) et au deuxième échangeur thermique (5), réalisant le cycle réfrigérant en comprimant et en dirigeant le réfrigérant quittant le premier échangeur de chaleur (4) vers le second échangeur de chaleur (5), et un bac de récupération (7) qui est disposé immédiatement sous le premier échangeur de chaleur (4), dans lequel l'eau se condensant sur le premier échangeur de chaleur (4) est recueillie, un conduit (11) dans lequel le réfrigérant est en circulation, qui s'étend entre le compresseur (6), le premier échangeur de chaleur (4) et le second échangeur de chaleur (5) ; **est caractérisé en ce qu'il** comporte une soupape (10) disposée sur le conduit (11) et qui permet de diriger le réfrigérant vers le premier échangeur de chaleur (4) ou le deuxième échangeur de chaleur (5) et une unité de commande (8) qui, en dirigeant le réfrigérant comprimé sortant du compresseur (6) au moyen de la soupape vers le premier échangeur de chaleur (4), permet que le premier échangeur de chaleur (4) devienne une source de chaleur et assure ainsi l'évaporation de l'eau collectée dans le bac de récupération (7).

2. Un lave-vaisselle (1) selon la déclaration 1, **est caractérisé en ce que** l'unité de commande (8) permet de diriger le réfrigérant comprimé sortant du compresseur (6) après l'étape de lavage vers le premier échangeur thermique (4).

3. Un lave-vaisselle (1) selon la déclaration 2, **est caractérisé en ce que** l'unité de commande (8) qui permet de faire circuler l'eau utilisée dans l'étape de lavage sur le second échangeur thermique (5) après que le réfrigérant comprimé quitte le compresseur (6) après l'étape de lavage est dirigé sur le premier échangeur thermique (4).

4. Un lave-vaisselle (1) comme dans l'une quelconque des déclarations ci-dessus, **est caractérisé en ce que** l'unité de commande (8) permet de diriger le réfrigérant comprimé sortant du compresseur (6) après le rinçage vers le premier échangeur (4) de chaleur.

5. Un lave-vaisselle (1) selon la déclaration 4, **est caractérisé en ce que** l'unité de commande (8) qui permet de faire circuler l'eau utilisée dans l'étape de rinçage sur le deuxième échangeur thermique (5) après que le réfrigérant comprimé sortant du compresseur (6) après l'étape de rinçage est dirigé sur le premier échangeur thermique (4).

6. Un lave-vaisselle (1) comme dans l'une quelconque des déclarations ci-dessus, **est caractérisé en ce que** l'unité de commande (8) permet de diriger le réfrigérant comprimé sortant du compresseur (6) pendant la phase de séchage sur le premier échangeur thermique (4).

7. Un lave-vaisselle (1) selon la déclaration 6, **est caractérisé en ce que** l'unité de commande (8) permet de faire passer la vapeur d'eau produite pendant l'étape de séchage sur le second échangeur thermique (5).

8. Un lave-vaisselle (1) comme dans l'une quelconque des déclarations ci-dessus, **est caractérisé en ce que** le bac de récupération (7), recueille l'eau qui se condense sur le second échangeur thermique (5) dans l'étape de séchage.

9. Un lave-vaisselle (1) comme dans l'une quelconque des déclarations ci-dessus, **est caractérisé en ce qu'un** ventilateur (9) est disposé à proximité du bac collecteur (7) et permet à l'air ambiant d'être soufflé vers le bac de récupération (7).

10. Un lave-vaisselle (1) selon la déclaration 9, **est caractérisé en ce que** le ventilateur (9) permet de diriger l'air chaud autour du compresseur (6) vers le bac de récupération (7).

11. Un lave-vaisselle (1) comme dans l'une quelconque des déclarations ci-dessus, **est caractérisé en ce que** la soupape (10) est une soupape quatre voies (10) qui comprend deux entrées et deux sorties.
